# EUROPÄISCHE PATENTSCHRIFT

(11) **EP 2 137 426 B1**
(45) Veröffentlichungstag und Bekanntmachung des Hinweises auf die Patenterteilung: **13.10.2010**
(21) Anmeldenummer: 08708119.6
(22) Anmeldetag: 23.01.2008
(51) Int. Cl.: F16D 65/097

(54) **BREMSBELAGHALTERUNG UND BREMSBELAG FÜR EINE SCHEIBENBREMSE**
BRAKE LINING MOUNTING AND BRAKE LINING FOR A DISC BRAKE
SUPPORT DE GARNITURE DE FREIN ET GARNITURE POUR FREIN À DISQUE

(30) Priorität: 26.01.2007 DE 102007004011; 03.04.2007 DE 102007016393
(43) Veröffentlichungstag der Anmeldung: 30.12.2009
(73) Patentinhaber: KNORR-BREMSE Systeme für Nutzfahrzeuge GmbH, 80809 München (DE)
(72) Erfinder: SALAPIC, Borislav, 80636 München (DE); LEHNER, Thomas, 81677 München (DE); PAHLE, Wolfgang, 83707 Bad Wiessee (DE)
(74) Vertreter: Mattusch, Gundula
(86) Internationale Anmeldenummer: PCT/EP2008/050756
(87) Internationale Veröffentlichungsnummer: WO 2008/090172

(56) Entgegenhaltungen:
- WO-A-98/11359
- DE-A1- 4 236 075
- DE-U1-202005 019 875
- FR-A- 2 555 271

## Beschreibung

Die vorliegende Erfindung betrifft eine Bremsbelaghalterung sowie einen Bremsbelag für eine Scheibenbremse gemäß dem Oberbegriff des Anspruchs 1.

Eine Bremsbelaghalterung ist aus der DE 40 20 287 A1 bekannt. Die dort gezeigte und beschriebene Konstruktion hat sich in der Praxis durchaus bewährt. Dabei ist die Bremsbelaghalterung so ausgebildet, dass die als Blattfeder ausgebildete Bremsbelagfeder an seitlichen Ausnehmungen an auskragenden Haltelaschen am Bremsbelagträger befestigt sind, durch den die Belaghaltefeder in radialer Richtung gehalten wird und zwar so, dass ein selbsttätiges Lösen in entspannter oder teilentspannter Lage ausgeschlossen ist.

Da zur Festlegung der Belaghaltefeder lediglich zwei Anbindungsstellen vorgesehen sind, die abständig zueinander angeordnet sind, wird die Belaghaltefeder auch als Griff benutzt und dabei mittig gefasst, so dass die Belaghaltefeder im Sinne eines zweiseitig eingespannten Trägers fungiert, mit der Neigung, ihn entsprechend stark durchzubiegen.

Unter Umständen kann sich durch diese Verformung die Federcharakteristik der Belaghaltefeder verändern, was sich nachteilig in der Funktion auswirken kann. Während des Betriebs treten beim Bremsvorgang an den Bremsbelägen große Wärmemengen auf, die von dem Bremsbelagmaterial und auch der Belaghaltefeder verkraftet werden müssen. Geometriebedingt nimmt dabei die als Blattfeder ausgebildete Belaghaltefeder sehr viel Wärme auf. Auch die Reibung bei der Sattelverschiebung ist bei einer solchen Blattfeder aufgrund der großen Berührungsfläche mit dem darüber liegenden Belaghaltebügel sehr groß.

Eine gattungsgemässe Halterung ist aus DE-U-20 2005 019 875 bekannt.

Der Erfindung liegt die Aufgabe zugrunde, eine Bremsbelaghalterung und einen Bremsbelag der gattungsgemäßen Art zu entwickeln, der die oben genannten Nachteile beseitigt und kostengünstig herzustellen ist.

Diese Aufgabe wird durch eine Bremsbelaghalterung mit den Merkmalen des Anspruchs 1 und einen Bremsbelag mit den Merkmalen des Anspruchs 18 gelöst.

Die Drahtfeder ist teilweise gewellt ausgebildet. Dieser gewellte Bereich dient im wesentlichen als Toleranzausgleich in Federlängsrichtung, beispielsweise infolge einer Längenausdehnung aufgrund von Temperaturdifferenzen. Auch einer Stauchung infolge einer Überdehnung der Feder wird so entschärft.

Die Belaghaltefeder in Form eines Federdrahtes ist einfach zu fertigen und benötigt im Vergleich zu einer Blattfeder auch weniger Platz und Material, was sich in einem reduzierten Kostenaufwand bei der Herstellung des Bremsbelags niederschlägt. Berücksichtigt man die großen Stückzahlen, in denen solche Bremsbeläge hergestellt werden, ist der Einfluss des Kostenfaktors sehr bedeutend und eine Reduzierung desselben äußerst vorteilhaft.

Durch die Erfindung wird außerdem erreicht, dass die Gefahr von Federbrüchen der Belaghaltefeder aufgrund der höheren Dauerfestigkeit der robusteren Form eines Drahtes erheblich reduziert ist.

Bedingt durch ihre Geometrie reduziert sich des Weiteren bei einer solchen Feder auch die Temperaturaufnahme während eines Bremsvorgangs, was zu längeren Standzeiten der Belaghaltefeder führt.

Auch die progressive Federkennlinie einer solchen Feder mit fest eingespannten Enden ist für den Einsatz in einer Umgebung mit unterschiedlich stark abzufedernden Krafteinwirkungen äußerst vorteilhaft, da dadurch Ermüdungserscheinungen des Federmaterials durch allzu große Verformungen vermieden und Belageingrabungen verringert werden.

Als weiteren Vorteil ist zu nennen, dass sich die Sattelverschiebekraft verringert, da eine Drahtfeder im Vergleich zu einer Blattfeder geometriebedingt einer deutlich geringeren Reibung mit einem auf die Drahtfeder drückenden Haltebügel ausgesetzt ist.

Nach einer besonders vorteilhaften Ausgestaltung sind die Enden der Belaghaltefeder in Bohrungen in der Belagträgerplatte stabil gehaltert. Solche Bohrungen sind ebenfalls ein sehr einfacher und kostengünstiger Arbeitsschritt bei der Herstellung eines Bremsbelags und machen die Belaghaltefeder äußerst kippsicher gegen seitliche Verkippungen während der Federbelastung. Außerdem kann aufgrund sehr geringer Toleranzen bei Bohrungen eine größere Präzision durch genaueres Auslegen der Feder erzielt werden.

Zusätzlich ist die Belaghaltefeder oberhalb der Bohrungen in Richtung der Drahtachse gewunden. Dadurch wird die Krafteinwirkung der Belaghaltefeder auf den Bremsbelag näher an den Bremsbelagschwerpunkt gerückt, wodurch eine etwaige Kippneigung der Belaghaltefeder weiter reduziert wird.

Weitere vorteilhafte Ausbildungen der Erfindung sind in den Unteransprüchen gekennzeichnet.

Nachfolgend werden Ausführungsbeispiele anhand der beigefügten Zeichnungen beschrieben. Es zeigen:
- Figur 1: eine prinzipielle Anordnung einer Scheibenbremse und deren Belaghaltesystem mit erfindungsgemäßen Bremsbelägen und Bremsbelaghalterung in einer perspektivischen Ansicht,
- Figur 2: eine Vorderansicht des Bremsbelages,
- Figur 3a: eine geschnittene Seitenansicht des Bremsbelages,
- Figur 3b: eine geschnittene Seitenansicht eines Details des Bremsbelages,
- Figur 4a: eine perspektivische Ansicht des Bremsbelages,
- Figur 4b: eine perspektivische Ansicht des Details von Figur 4a,
- Figur 5a: eine perspektivische Ansicht einer besonderen Ausführungsform der Belaghaltefeder,
- Figur 5b: eine Draufsicht der besonderen Ausführungsform der Belaghaltefeder von Figur 5a.
- Figur 5c: eine Seitenansicht der besonderen Ausführungsform der Belaghaltefeder von Figur 5a.

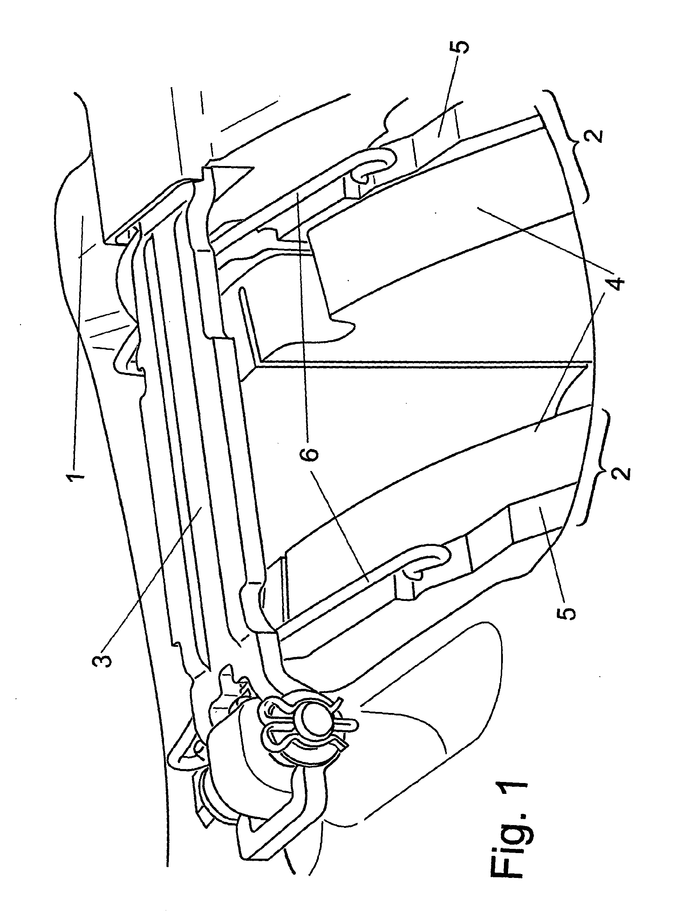

Die prinzipielle Anordnung einer Scheibenbremse und deren Belaghaltesystem ist in der Figur 1 erkennbar. Die Scheibenbremse weist einen Bremssattel 1 auf, der eine Bremsscheibe (nicht gezeigt) umfasst, an die beidseitig Bremsbeläge 2 anpressbar sind, wobei einer der Bremsbeläge oder auch beide mittels einer nicht dargestellten Zuspanneinrichtung im Funktionsfall gegen die Bremsscheibe gedrückt wird bzw. werden. Die Bremsbeläge 2 sind in an dem Bremsträger vorgesehenen Belagschächten vorzugsweise zu beiden Seiten der Bremsscheibe eingesetzt und bestehen aus einem Reibbelag 4 sowie einer Belagträgerplatte 5. Zur radialen Sicherung der Bremsbeläge 2 ist ein Belaghaltebügel 3 quer über den beiden Bremsbelägen 2 befestigt, an dem sich als Drahtfedern ausgebildete Belaghaltefedern 6 der Bremsbeläge 2 abstützen.

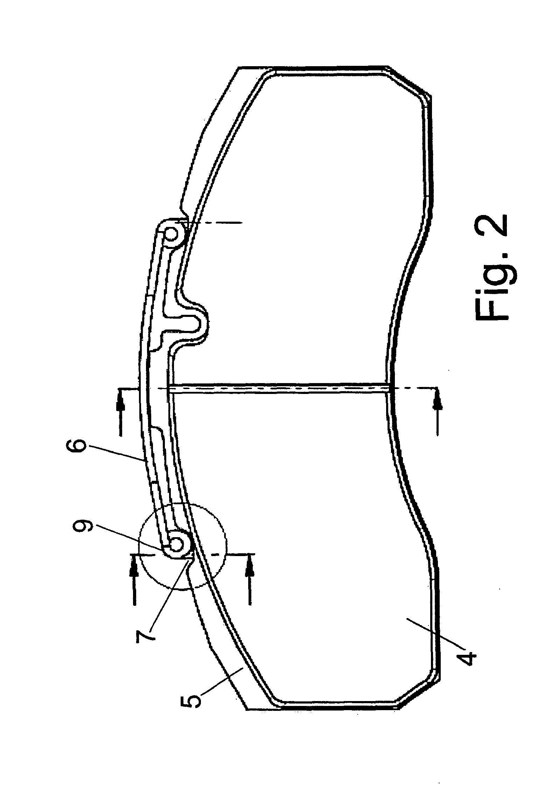

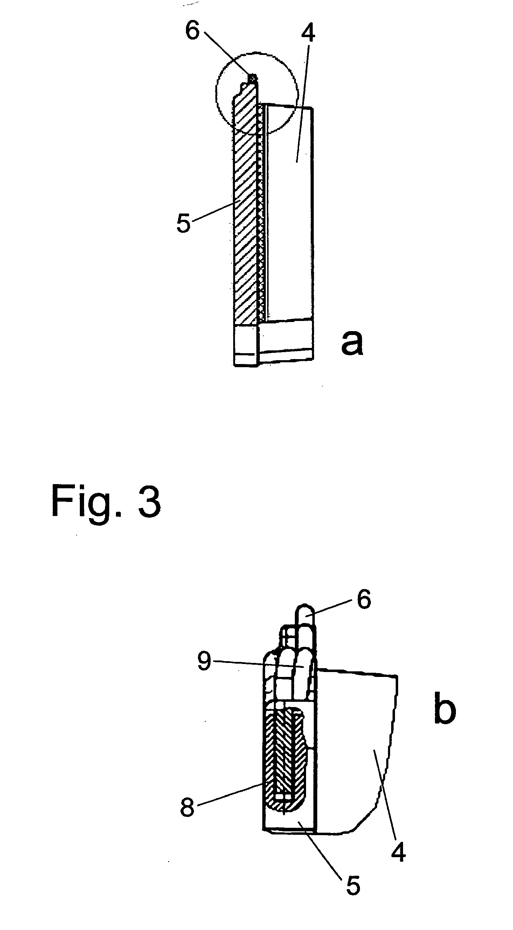

In den Figuren 2 bis 5c ist ein Bremsbelag 2 mit einer als bogenförmige Drahtfeder ausgebildeten Belaghaltefeder 6 dargestellt. Wie in Figur 2 zu sehen ist, ist die Belaghaltefeder 6 oberhalb und entlang der zur Belagschachtöffnung gerichteten Stirnlängsseite der Belagträgerplatte 5 angeordnet. Dabei erstreckt sich die Belaghaltefeder 6 zentriert etwa über die halbe Belagträgerplatte. In der Mitte der Stirnlängsseite der Belagträgerplatte 5weist die Belagträgerplatte einen Federwegbegrenzer 10 auf, der als Anschlag für die Belaghaltefeder 6 dient. Der Querschnitt des für die Feder verwendeten Drahtes ist vorzugsweise rund, wie in Figur 3b gezeigt, kann aber auch rechteckig, vieleckig, halbrund oder elliptisch ausgebildet sein. Der Durchmesser des Drahtes beträgt bevorzugt etwa 3±1 Millimeter.

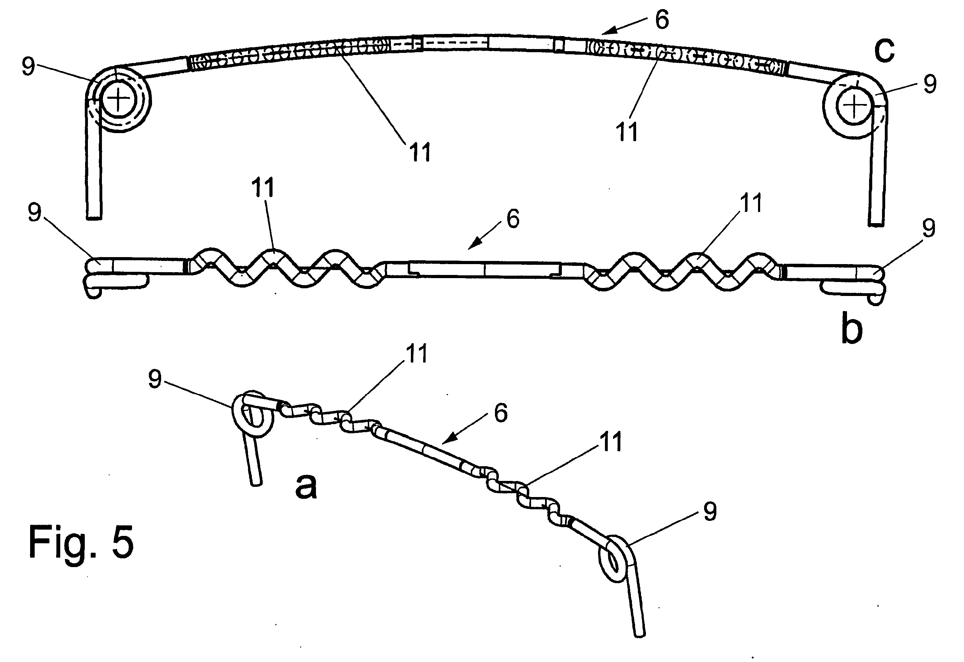

In einer besonderen Ausführungsform ist ein Teil der Belaghaltefeder wellenförmig ausgebildet (siehe Figuren 5a bis 5c), wobei die Wellen 11 der Belaghaltefeder 6 in der Ebene der Stirnlängsseite der Belagträgerplatte 5 und quer zur Drahtachsenrichtung mit einer maximalen Auslenkung von etwa 45 Grad ausgebildet sind.

Die Belaghaltefeder 6 ist verliergesichert und radial auslenkbar an einer den Reibbelag 4 tragenden Belagträgerplatte 5 eines Bremsbelages 2 befestigt. Wie in Figur 3b besonders gut zu sehen ist, sind die Enden der Belaghaltefeder 6 in dem Drahtquerschnitt entsprechendend geformten Bohrungen 8 in der zur Belagschachtöffnung gerichteten Stirnlängsseite der Belagträgerplatte 5 kraftschlüssig oder stoffschlüssig gehaltert. Die Halterung geschieht vorzugsweise durch Presspassung, kann aber auch durch Kleben, Löten oder Schweißen erfolgen. Vorzugsweise sind am Ort der Bohrungen 8 konkave Aussparungen in der Belagträgerplatte 5 vorgesehen. Die Halterung durch Kleben, Löten oder Schweißen ist auch ohne Bohrung 8 in der konkaven Aussparung möglich. Die Halterung in den Bohrungen kann auch durch die Riffelung des Drahtes oder Verkeilung erfolgen.

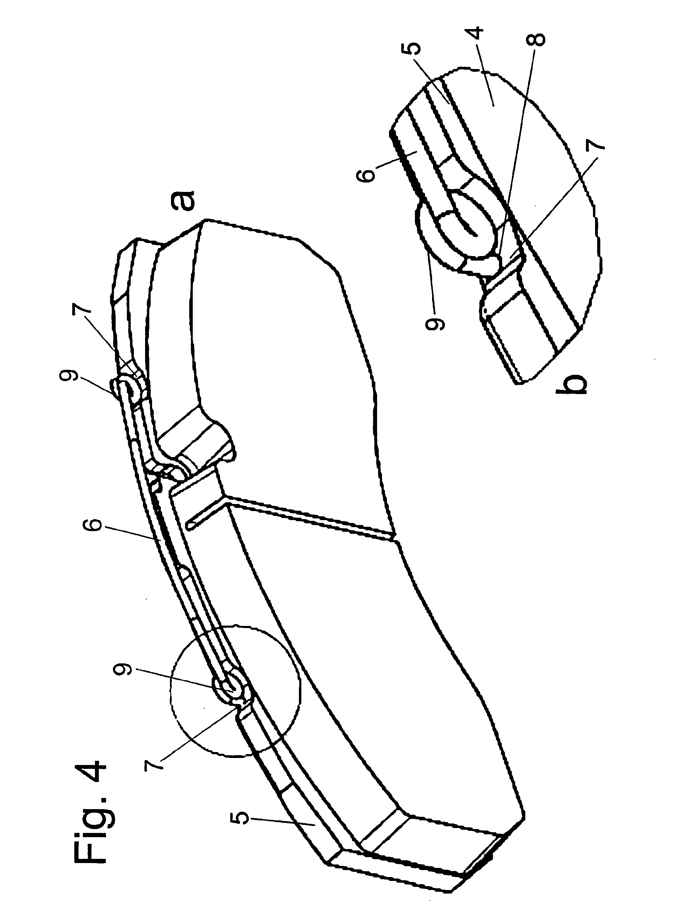

Oberhalb der Bohrungen 8 ist die Belaghaltefeder 6 zu einer Windung 9 gewunden, wobei die Windungsachse quer zur Drahtfederachse verläuft. Wie in Figur 4b zu sehen ist, beschreibt die Windung 9 wenigstens einen vollständigen Kreis von 360°, insbesondere einen Winkel von ca. 450 Grad. Durch den durch diese Windung 9 entstehenden Drahtversatz wird die Kippneigung des Drahts in Richtung der Bremsscheibenachse reduziert.

Wie in Figur 4b besonders deutlich zu sehen ist, beginnt die Windung 9 der Belaghaltefeder 6, von der Mitte der Belaghaltefeder 6 nach außen betrachtet, am freien Ende jeweils mit einer Biegung nach unten zur Stirnlängsseite der Belagträgerplatte 5 hin hinein in die konkave Aussparungen 7, so dass die Windung der Form der Aussparung 7 folgt. Dadurch ergibt sich eine insgesamt kompaktere Bauweise.

Die Länge der Aussparungen 7 entlang der Stirnlängsseite der Belagträgerplatte 5 ist etwas größer als der Durchmesser der Drahtfederwindung. Durch diese Anbringungsart der Belaghaltefeder 6 auf den Bremsbelag 2 sind weitere Arretiervorrichtungen für die Belaghaltefeder 6 an anderen Positionen der Stirnseite des Bremsbelags 2 wie Ösen, Klammern oder Klemmen nicht mehr notwendig, so dass die Herstellung des Bremsbelags 2 dadurch vereinfacht wird.

### Bezugszeichenliste

- 1: Bremssattel
- 2: Bremsbelag
- 3: Belaghaltebügel
- 4: Reibbelag
- 5: Belagträgerplatte
- 6: Belaghaltefeder
- 7: Aussparung
- 8: Bohrung
- 9: Windung
- 10: Federwegbegrenzer
- 11: Wellenförmiger Bereich der Belaghaltefeder

## Patentansprüche

1. Bremsbelaghalterung für eine Scheibenbremse, insbesondere für Nutzfahrzeuge, wobei beidseitig einer Bremsscheibe zugeordnete Bremsbeläge (2) federbelastet jeweils in einem Belagschacht eines ortsfesten Bremsträgers oder Bremssattels (1) gelagert sind, die jeweils eine Belaghaltefeder (6) aufweisen, die aus einem Draht geformt, bogenförmig ausgebildet sowie verliergesichert und radial auslenkbar an einer einen Reibbelag (4) tragenden Belagträgerplatte (5) eines Bremsbelags (2) gehalten sind und die radial von der Achse der Bremsscheibe weg gegen einen in einem Bremssattel (1) gehaltenen Belaghaltebügel (3) drückt, wobei die Enden der Belaghaltefeder (6) in Drahtachsenrichtung mindestens eine Teilwindung oder Windung (9) aufweisen, **dadurch gekennzeichnet, dass** die Belaghaltefeder (6) mindestens teilweise wellenförmig quer zur Drahtachsenrichtung und parallel zur Oberfläche der zur Belagschachtöffnung gerichteten Stimlängsseite der Belagträgerplatte (5) gebogen ist.

2. Bremsbelaghalterung nach Anspruch 1, **dadurch gekennzeichnet, dass** die maximale Auslenkung der wellenförmigen Biegungen (11) der Belaghaltefeder aus einer Geraden zwischen den Befestigungspunkten der Belaghaltefeder etwa 45 Grad beträgt.

3. Bremsbelaghalterung nach einem der Ansprüche 1 oder 2, **dadurch gekennzeichnet, dass** der Drahtdurchmesser der Belaghaltefeder (6) etwa 3±1mm beträgt.

4. Bremsbelaghalterung nach einem der Ansprüche 1 bis 3, **dadurch gekennzeichnet, dass** in der zur Belagschachtöffnung gerichteten Stimlängsseite der Belagträgerplatte (5) zwei Aussparungen (7) in der Belagträgerplatte (5) vorgesehen sind, die etwa eine Federlänge voneinander beabstandet sind.

5. Bremsbelaghalterung nach Anspruch 4, **dadurch gekennzeichnet, dass** die Aussparungen (7) von konkaver Gestalt sind.

6. Bremsbelaghalterung nach einem der Ansprüche 4 oder 5, **dadurch gekennzeichnet, dass** an der Stelle der Aussparungen (7) in der zur Belagschachtöffnung gerichteten Stimlängsseite der Belagträgerplatte (5) jeweils eine Bohrung (8) in der Belagträgerplatte (5) vorgesehen ist.

7. Bremsbelaghalterung nach einem der vorstehenden Ansprüche, **dadurch gekennzeichnet, dass** die Enden der Belaghaltefeder (6) jeweils in einer dem Querschnitt des Drahtes angepassten Bohrung (8) oder in der Aussparung (7) in der zur Belagschachtöffnung gerichteten Stirnlängsseite der Belagträgerplatte (5) kraftschlüssig oder stoffschlüssig angebunden sind.

8. Bremsbelaghalterung nach einem der Ansprüche 4 bis 7, **dadurch gekennzeichnet, dass** die Windung (9) am Ende der Belaghaltefeder (6) der Form der Aussparung (7) folgt.

9. Bremsbelaghalterung nach einem der vorstehenden Ansprüche, **dadurch gekennzeichnet, dass** die Belaghaltefeder (6) durch Presspassung in eine dem Querschnitt des Drahtes angepasste Bohrung (8) in der zur Belagschachtöffnung gerichteten Stimlängsseite der Belagträgerplatte (5) angebunden ist.

10. Bremsbelaghalterung nach einem der vorstehenden Ansprüche, **dadurch gekennzeichnet, dass** die Belaghaltefeder (6) durch Kleben in eine dem Querschnitt des Drahtes angepasste Bohrung (8) oder in der Aussparung (7) in der zur Belagschachtöffnung gerichteten Stimlängsseite der Belagträgerplatte (5) angebunden ist.

11. Bremsbelaghalterung nach einem der Ansprüche 1 bis 9, **dadurch gekennzeichnet, dass** die Belaghaltefeder (6) durch Löten in eine dem Querschnitt des Drahtes angepasste Bohrung (8) oder in der Aussparung (7) in der zur Belagschachtöffnung gerichteten Stimlängsseite der Belagträgerplatte (5) angebunden ist.

12. Bremsbelaghalterung nach einem der Ansprüche 1 bis 9, **dadurch gekennzeichnet, dass** die Belaghaltefeder (6) durch Schweißen in eine dem Querschnitt des Drahtes angepasste Bohrung (8) oder in der Aussparung (7) in der zur Belagschachtöffnung gerichteten Stimlängsseite der Belagträgerplatte (5) angebunden ist.

13. Bremsbelaghalterung nach einem der vorstehenden Ansprüche, **dadurch gekennzeichnet, dass** der Draht (6) einen mehreckigen Querschnitt aufweist.

14. Bremsbelaghalterung nach einem der vorstehenden Ansprüche, **dadurch gekennzeichnet, dass** der Draht (6) einen rechteckigen Querschnitt aufweist.

15. Bremsbelaghalterung nach einem der Ansprüche 1 bis 12, **dadurch gekennzeichnet, dass** der Draht (6) einen runden Querschnitt aufweist.

16. Bremsbelaghalterung nach einem der Ansprüche 1 bis 12, **dadurch gekennzeichnet, dass** der Draht (6) einen halbrunden Querschnitt aufweist.

17. Bremsbelaghalterung nach einem der Ansprüche 1 bis 12, **dadurch gekennzeichnet, dass** der Draht (6) einen elliptischen Querschnitt aufweist.

18. Bremsbelag für eine Scheibenbremse, insbesondere für Nutzfahrzeuge, die aufweist: eine Belagträgerplatte (5), einen Reibbelag (4) und eine Belaghaltefeder (6), die verliergesichert und radial auslenkbar an der Belagträgerplatte (5) des Bremsbelages (2) gehalten ist, **dadurch gekennzeichnet, dass** die Belaghaltefeder (6) gemäß einem oder mehreren der vorstehenden Ansprüche ausgebildet ist.

## Claims

1. A disk brake mounting for a disc brake, in particular for commercial vehicles, in which brake linings (2) arranged spring-loaded on either side of a brake disc are supported in a lining layer of a fixed brake carrier or brake caliper (1), said brake linings (2) each having a lining holding spring (6) formed from a wire, being curved in shape and being held on a lining carrier plate (5) of a brake lining (2) carrying a friction lining (4) such that they are captive and can be deflected radially, and pressing radially away from the axis of the brake disc against a lining holding bracket (3) held in a brake caliper (1), the ends of the lining holding spring (6) in the direction of the wire axis having at least one partial coil or coil (9), **characterized in that** the lining holding spring (6) is at least partially curved in an undulating form perpendicular to the direction of the wire axis and parallel to the surface of the end long side of the brake carrier plate (5) facing in the direction of the lining layer opening.

2. A disk brake mounting as claimed in claim 1, **characterized in that** the maximum deflection of the undulating curves (11) of the lining holding spring from a straight line between the fastening points of the lining holdings spring is approximately 45 degrees.

3. A disk brake mounting as claimed in claim 1 or 2, **characterized in that** the wire diameter of the lining holding spring (6) is approximately 3+/-1 mm.

4. A disk brake mounting as claimed in one of claims 1 to 3, **characterized in that** provided in the end long side of the brake carrier plate (5) facing in the direction of the lining layer opening are two recesses (7) which are spaced approximately a spring's length apart.

5. A disk brake mounting as claimed in claim 4, **characterized in that** the recesses (7) are concave in shape.

6. A disk brake mounting as claimed in one of claims 4 or 5, **characterized in that** a hole (8) is provided in the brake carrier plate (5) instead of the recesses (7) in the end long side of the brake carrier plate (5) facing in the direction of the lining layer opening.

7. A disk brake mounting as claimed in one of the preceding claims, **characterized in that** the ends of the lining holding spring (6) are each affixed in a force or fusion fit in a hole (8) which matches the cross-section of the wire or in the recess (7) in the end long side of the brake carrier plate (5) facing in the direction of the lining layer opening.

8. A disk brake mounting as claimed in one of claims 4 to 7, **characterized in that** the coil (9) at the end of the lining holding spring (6) follows the form of the recess (7).

9. A disk brake mounting as claimed in one of the preceding claims, **characterized in that** the lining holding spring (6) is affixed in a press fit in a hole (8) which matches the cross-section of the wire in the end long side of the brake carrier plate (5) facing in the direction of the lining layer opening.

10. A disk brake mounting as claimed in one of the preceding claims, **characterized in that** the lining holding spring (6) is affixed by adhesion in a hole (8) which matches the cross-section of the wire or in the recess (7) in the end long side of the brake carrier plate (5) facing in the direction of the lining layer opening.

11. A disk brake mounting as claimed in one of claims 1 to 9, **characterized in that** the lining holding spring (6) is affixed by soldering in a hole (8) which matches the cross-section of the wire or in the recess (7) in the end long side of the brake carrier plate (5) facing in the direction of the lining layer opening.

12. A disk brake mounting as claimed in one of claims 1 to 9, **characterized in that** the lining holding spring (8) is affixed by welding in a hole (8) which matches the cross-section of the wire or in the recess (7) in the end long side of the brake carrier plate (5) facing in the direction of the lining layer opening.

13. A disk brake mounting as claimed in one of the preceding claims, **characterized in that** the wire (6) has a polygonal cross-section.

14. A disk brake mounting as claimed in one of the preceding claims, **characterized in that** the wire (6) has a rectangular cross-section.

15. A disk brake mounting as claimed in one of claims 1 to 12, **characterized in that** the wire (6) has a circular cross-section.

16. A disk brake mounting as claimed in one of claims 1 to 12, **characterized in that** the wire (6) has a semicircular cross-section.

17. A disk brake mounting as claimed in one of claims 1 to 12, **characterized in that** the wire (6) has an elliptical cross-section.

18. A brake lining for a disk brake, in particular for commercial vehicles, comprising: a brake carrier plate (5), a friction lining (4) and a brake holding spring (6) which is held on the brake carrier plate (5) of the brake lining (2) such that it is captive and can be deflected radially, **characterized in that** the brake holding spring (6) is designed as claimed in one or more of the preceding claims.

## Revendications

1. Monture de garniture de frein pour un frein à disque, notamment pour des véhicules utilitaires, dans laquelle des garnitures (2) de frein associées à un disque de frein sont soumises à l'action d'un ressort respectivement dans un puits de garniture d'un support de frein fixe ou d'un étrier (1) de frein, garnitures qui ont respectivement un ressort (6) de maintien de garniture, qui est formé d'un fil métallique, qui sont en forme d'arc ainsi qu'empêchées de se perdre et maintenues, en pouvant être déviées radialement, sur une plaque (5) de support d'une garniture (2) de frein portant une garniture (4) de friction et qui appuient, en s'éloignant radialement de l'axe du disque de frein, sur un étrier (3) de maintien de garniture maintenu dans un étrier (1) de frein, les extrémités du ressort (6) de maintien de garniture ayant, dans la direction de l'axe du fil, au moins une spire partielle ou une spire (9), **caractérisée en ce que** le ressort (6) de maintien de garniture est au moins en partie courbé sous forme ondulée transversalement dans la direction de l'axe du fil et parallèlement à la surface du côté longitudinal frontal de la plaque (5) de support et de garniture du côté dirigé vers l'ouverture du puits de garniture.

2. Monture de garniture de frein suivant la revendication 1, **caractérisée en ce que** la déviation maximum de courbures (11) de forme ondulée du ressort de maintien de garniture à partir d'une droite comprise entre les points de fixation du ressort de maintien de garniture est d'environ 45 degrés.

3. Monture de garniture de frein suivant la revendication 1 ou 2, **caractérisée en ce que** le diamètre du fil du ressort (6) de maintien de garniture est d'environ 3±1 mm.

4. Monture de garniture de frein suivant l'une des revendications 1 à 3, **caractérisée en ce que** il est prévu, dans le côté longitudinal frontal dirigé vers l'ouverture du puits de garniture de la plaque (5) de support de garniture, deux évidements (7) dans la plaque (5) de support de garniture, évidements qui sont à distance l'un de l'autre d'à peu près une longueur de ressort.

5. Monture de garniture de frein suivant la revendication 4, **caractérisée en ce que** les évidements (7) sont de forme concave.

6. Monture de garniture de frein suivant l'une des revendications 1 ou 5, **caractérisée en ce que**, au lieu des évidements (7), il est prévu, dans le côté longitudinal frontal dirigé vers l'ouverture du fil de garniture de la plaque (5) de support de garniture, respectivement un perçage (8) dans la plaque (5) de support de garniture.

7. Monture de garniture de frein suivant l'une des revendications précédentes, **caractérisée en ce que** les extrémités du ressort (6) de maintien de garniture sont fixées par complémentarité de force ou par complémentarité de matière respectivement dans un perçage (8) adapté à la section transversale du fil ou dans l'évidement (7) dans le côté longitudinal frontal dirigé vers l'ouverture du puits de garniture.

8. Monture de garniture de frein suivant l'une des revendications 4 à 7, **caractérisée en ce que** la spire (9) suit à l'extrémité du ressort (6) de maintien de garniture la forme de l'évidement (7).

9. Monture de garniture de frein suivant l'une des revendications précédentes, **caractérisée en ce que** le ressort (6) de maintien de garniture est relié par ajustage serré dans un perçage (8) adapté à la section transversale du fil dans le côté longitudinal frontal dirigé vers l'ouverture du puits de garniture.

10. Monture de garniture de frein suivant l'une des revendications précédentes, **caractérisée en ce que** le ressort (6) de maintien de garniture est relié par collage dans un perçage (8) adapté à la section transversale du fil ou dans l'évidement (7), dans le côté longitudinal frontal dirigé vers l'ouverture du puits de garniture, de la plaque (5) de support de garniture.

11. Monture de garniture de frein suivant l'une des revendications 1 à 9, **caractérisée en ce que** le ressort (6) de maintien de garniture est fixé par brasure dans un perçage (8) adapté à la section transversale du fil ou dans l'évidement (7), dans le côté longitudinal frontal dirigé vers l'ouverture du puits de garniture, de la plaque (5) de support de garniture.

12. Monture de garniture de frein suivant l'une des revendications 1 à 9, **caractérisée en ce que** le ressort (6) de maintien de garniture est fixé par soudure dans un perçage (8) adapté à la section transversale du fil ou dans l'évidement (7), dans le côté longitudinal frontal dirigé vers l'ouverture du puits de garniture, de la plaque (5) de support de garniture.

13. Monture de garniture de frein suivant l'une des revendications précédentes, **caractérisée en ce que** le fil (6) a une section transversale polygonale.

14. Monture de garniture de frein suivant l'une des revendications précédentes, **caractérisée en ce que** le fil (6) a une section transversale rectangulaire.

15. Monture de garniture de frein suivant l'une des revendications 1 à 12, **caractérisée en ce que** le fil (6) a une section transversale circulaire.

16. Monture de garniture de frein suivant l'une des revendications 1 à 12, **caractérisée en ce que** le fil (6) a une section transversale hémicirculaire.

17. Monture de garniture de frein suivant l'une des revendications 1 à 12, **caractérisée en ce que** le fil (6) a une section transversale elliptique.

18. Garniture de frein à disque, notamment pour des véhicules utilitaires, qui comporte : une plaque (5) de support de garniture, une garniture (4) de friction, un ressort (6) de maintien de garniture, qui est maintenu sans pouvoir se perdre et en pouvant être dévié radialement sur la plaque (5) de support de garniture de la garniture (2) de frein, **caractérisée en ce que** le ressort (6) de maintien de garniture est constitué suivant l'une ou plusieurs des revendications précédentes.
